# FASCICULE DE BREVET EUROPEEN

(11) **EP 2 688 247 B1**
(45) Date de publication et mention de la délivrance du brevet: **27.03.2019**
(21) Numéro de dépôt: 13176752.7
(22) Date de dépôt: 16.07.2013
(51) Int. Cl.: H04L 12/24, H04L 12/26, H04L 12/70

(54) **Optimisation d'un service de dissemination des informations de qualité de service réseau.**
Optimierung eines Verteilungsdienstes von Qualitätsinformationen eines Netzwerkdienstes
Optimizing a service for disseminating network quality of service information.

(30) Priorité: 17.07.2012 FR 1202034
(43) Date de publication de la demande: 22.01.2014
(73) Titulaire: Thales, 92400 Courbevoie (FR)
(72) Inventeur: Bouet, Mathieu, 92230 Gennevilliers (FR); Leguay, Jérémie, 92300 Gennevilliers (FR); Boite, Julien, 92300 Gennevilliers (FR); Conan, Vania, 92230 Gennevilliers (FR)
(74) Mandataire: Dudouit, Isabelle

(56) Documents cités:
- US-A- 5 870 540
- US-A1- 2002 112 040
- DAVID SONTAG ET AL: "Scaling all-pairs overlay routing", CONEXT '09 PROCEEDINGS OF THE 5TH INTERNATIONAL CONFERENCE ON EMERGING NETWORKING EXPERIMENTS AND TECHNOLOGIES; DECEMBER 1 - 4, 2009; ROME, ITALY, ASSOCIATION FOR COMPUTING MACHINERY, NEW YORK, NY, USA, 1 December 2009 (2009-12-01), pages 145-156, XP058093211, DOI: 10.1145/1658939.1658956 ISBN: 978-1-60558-636-6

## Description

La présente invention a pour objet un procédé et un dispositif pour optimiser la gestion et la dissémination d'informations de qualité de liens overlay. Un réseau overlay est un réseau logique superposé à un réseau informatique, les noeuds du réseau overlay étant interconnectés par des liens logiques. Un lien logique correspond à l'agrégation des liens et équipements qui se trouvent sur le chemin entre deux noeuds dans l'infrastructure physique du réseau sous-jacent. L'invention concerne, par exemple, la dissémination d'informations de la qualité de liens overlay. Plus précisément, l'invention effectue une adaptation de la fréquence à laquelle les liens sont « monitorés » en fonction de leur utilisation. Le terme « monitorer » dans la présente description se réfère à l'évaluation d'un lien, au suivi des performances offertes par un lien logique dans un réseau overlay. L'invention effectue notamment une adaptation de la fréquence à laquelle les informations de qualité de liens sont disséminées en fonction de leur utilisation.

L'invention se situe notamment dans le domaine des réseaux d'infrastructure composés de plusieurs noeuds interconnectés par le biais d'un ou plusieurs réseaux étendus, ou réseaux WAN (Wide Area Network), tel que l'Internet. Un noeud dans la topologie overlay peut être indépendant ou appartenir à un réseau local LAN (Local Area Network).

L'invention concerne le domaine des architectures réseaux dans lesquelles des indicateurs de performance sont collectés pour prendre des décisions d'acheminement des flux de communication.

Un noeud rendez-vous serveur dans la présente application est un noeud qui va déterminer la meilleure route entre une paire de noeuds donnée et qui va retourner cette information de meilleure route (table de routage) aux deux noeuds de la paire, noeuds qui sont appelés rendez-vous clients.

Dans une architecture de type overlay, les noeuds du réseau sont interconnectés au travers d'au moins un réseau étendu (WAN). Un réseau étendu, tel que l'Internet, fournit un accès au médium de communication et un service de transport des paquets assurant une connectivité entre les noeuds du réseau overlay.

Un problème technique général associé aux réseaux de ce type est le routage et l'acheminement des flux de données entre les noeuds de façon à respecter les contraintes de diffusion associées à chacun d'eux. En effet, il est possible de mettre en oeuvre un mécanisme de routage dans un réseau overlay pour acheminer les flux de données entre deux noeuds en utilisant un chemin overlay (agrégation de liens logiques et de noeuds overlay) autre que le lien logique interconnectant directement ces deux noeuds. Cette technique fait référence à l'ingénierie de trafic (« Traffic Engineering » en anglais), qui permet, par exemple, d'assurer que le niveau de qualité requis par certains flux de données est atteint. Par extension, elle permet également d'assurer un meilleur niveau de résilience. La résilience peut être définie comme la capacité d'un réseau à faire face à différents types de menaces en les détectant et en appliquant des solutions correctives dans un délai minimal pour assurer un fonctionnement même en mode dégradé. Les menaces peuvent être de simples pannes, une dégradation des ressources disponibles, des situations critiques nuisant à l'infrastructure physique (catastrophes naturelles, piratage, ..) ou encore du trafic non légitime qui pourrait provoquer un dysfonctionnement. Assurer la résilience des réseaux en eux-mêmes, mais aussi et surtout des services qu'ils fournissent ou supportent représente un enjeu majeur.

Faire de l'ingénierie de trafic dans un réseau overlay requiert de pouvoir comparer les performances offertes par les liens logiques. Le réseau d'interconnexion est supposé non maitrisé (il peut s'agir d'un unique réseau d'opérateur ou d'un ensemble de réseaux d'opérateurs interconnectés), et ne fournit pas d'informations sur son état et sur les performances qu'il offre. Chaque noeud du réseau overlay doit donc observer l'état du réseau, et plus particulièrement des liens logiques qui le lient aux autres noeuds du réseau.

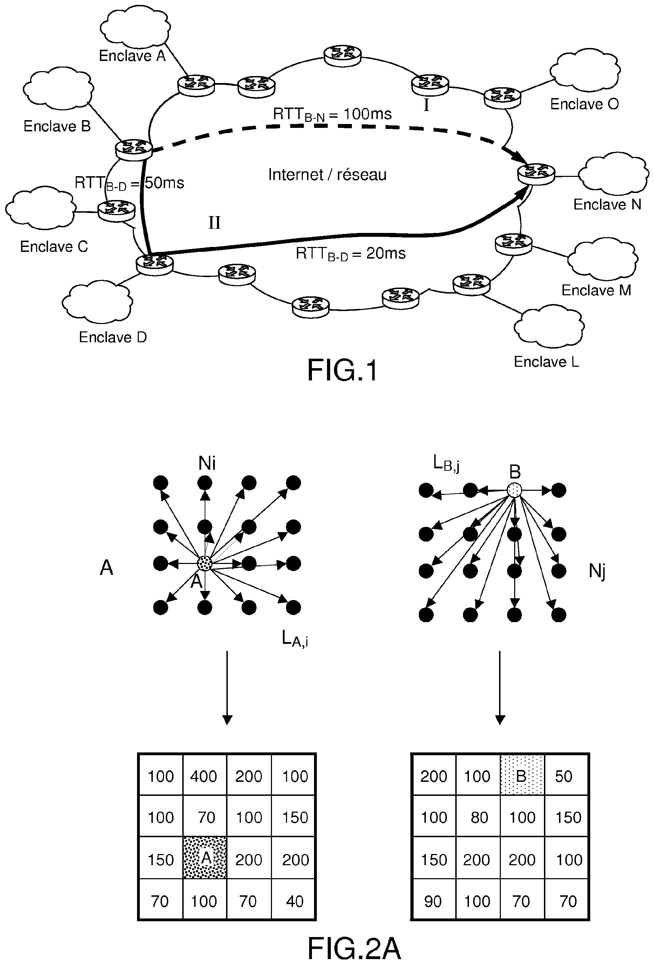

Un des problèmes techniques posés est donc de « monitorer » les liens logiques, et donc l'état du réseau d'interconnexion, comme il est schématisé à la figure 1 qui représente un réseau d'infrastructure reliant un nombre N d'enclaves réseau.

Dans un tel contexte, un noeud de l'overlay est, par exemple, le routeur en bordure de chaque enclave, qui réalise l'interconnexion avec le réseau étendu. Un réseau local (LAN) peut aussi être appelé « enclave » dans le sens où les flux de données qui en sortent peuvent être sécurisés. Les flux de données sont transférés d'une enclave à une autre au travers du réseau d'interconnexion non maîtrisé. Ceci est représenté par la route I entre une enclave B et une enclave N sur la figure 1. Pour suivre l'état de ce lien, on contrôle, par exemple, le délai entre les deux enclaves B, N en mesurant le temps aller-retour (RTT, « Round Trip Time ») entre ces deux enclaves. Le plan de routage dans le réseau d'interconnexion n'est pas connu des enclaves et, en particulier, il ne garantit pas un délai minimal entre les deux enclaves, alors qu'il peut être important de le faire pour des flux tels que la communication voix, les messages urgents. Inversement, il est possible de trouver un chemin logique à deux bonds dans le réseau overlay qui passe par une enclave relai et qui réduit le délai sur la route, comme il est représenté par le chemin Il de la figure 1, passant par l'enclave D.

L'un des problèmes techniques posés est de permettre de trouver la meilleure route à deux bonds, par exemple, dans l'overlay formé par les enclaves pour un critère de qualité de lien mesuré. Dans cet exemple, l'overlay est constitué par les noeuds des enclaves et des connexions entre tous ces noeuds, et le critère est le délai aller-retour (RTT).

De manière générale, les solutions d'ingénierie de trafic reposent sur la connaissance de métriques de qualité de service, ou QoS, comme le délai, la gigue, le taux de perte, la bande passante afin de satisfaire les contraintes en qualité de service d'un maximum de flux, ou au moins des flux les plus critiques. D'autres critères, indépendants des indicateurs de QoS, peuvent être pris en compte, comme par exemple le niveau de sécurité, la position géographique/administrative, ou le coût des liens. Il s'avère donc nécessaire de disposer d'un mécanisme permettant notamment:
- de contrôler ou monitorer les connexions entre les noeuds, c'est-à-dire tous les liens logiques du réseau overlay,
- de disséminer les informations « monitorées » afin que tous les noeuds puissent reconstruire une vue utile de la topologie du réseau et de la qualité des liens, et ainsi faire le meilleur usage des ressources disponibles.

L'un des problèmes qui se posent est que plus le nombre de noeuds augmente, plus le nombre de connexions à monitorer augmente, et plus la quantité d'informations monitorées à disséminer augmente. La proportion de bande-passante consommée pour l'obtention et la dissémination de ces informations augmente donc considérablement, au détriment de la bande passante réservée aux données.

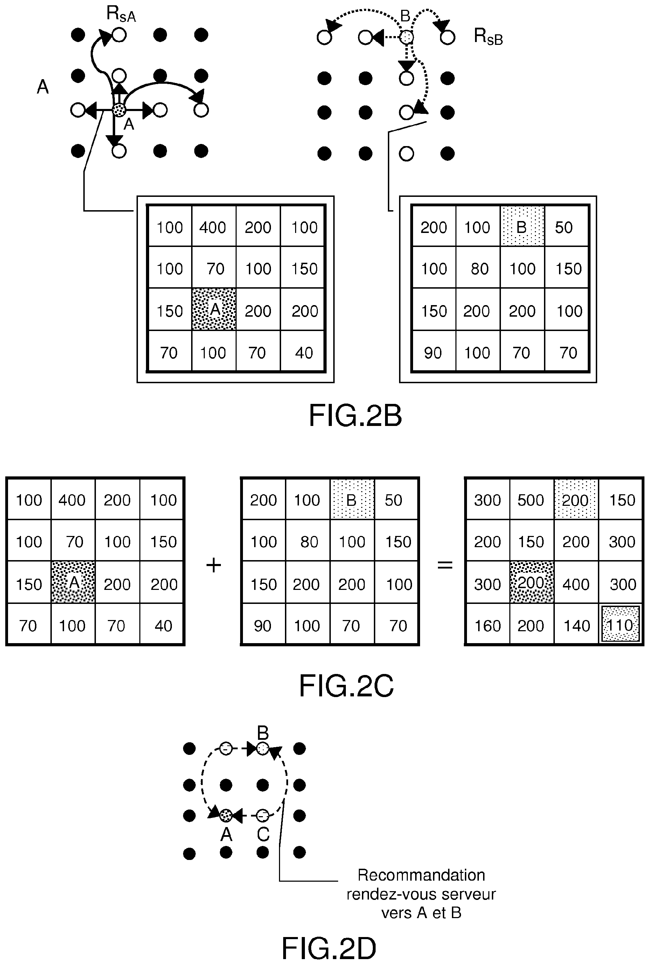

Le document de D.Sontag, Y.Zhang, A.Phanishayee, D.Andersern, D.KArger, intitulé « Scaling All-Pairs Overlay Routing » in ACM CoNEXT, Dec 2009, décrit une méthode pour réduire la charge due à la dissémination des états des liens, en organisant logiquement les noeuds sous forme de grille et en régissant les échanges entre ces noeuds de la manière suivante : 1) seuls les noeuds sur une même ligne/colonne s'échangent les informations d'états des liens, 2) chaque noeud entrecoupe les informations collectées à l'étape 1) et calcule, pour chaque autre noeud sur la même ligne/colonne et pour chaque destination dans l'overlay, le meilleur chemin à utiliser. Le résultat de ces calculs est transmis à chaque noeud situé sur la même ligne/colonne sous forme de recommandations de chemins, ou plus précisément de noeuds relais à utiliser pour transférer les flux de données à chaque autre noeud destination. Les figures 2A, 2B, 2C, 2D schématisent l'enchainement des étapes.

Sur la figure 2A, le noeud A et le noeud B vont contrôler chacun leurs liens L_{A,i} L_{B,j} avec les autres noeuds Ni, Nj du réseau. Chaque noeud A, B mesure le délai existant entre lui-même et chacun des noeuds du réseau. Globalement, chaque noeud Ni, Nj réalise ces mesures et possède finalement une carte de connectivité regroupant les résultats de ces mesures vers chacun des autres noeuds Ni, Nj. K_{A} et K_{B} représentent respectivement les cartes de connectivité des noeuds A et B.

Sur la figure 2B on a représenté l'étape où chacun des noeuds A et B, jouant alors le rôle de rendez-vous client, transmet sa carte de connectivité à des noeuds rendez-vous serveurs. Un noeud du réseau est, dans cet exemple, considéré comme un noeud rendez-vous serveur lorsqu'il se trouve disposé sur la même ligne ou la même colonne que le noeud considéré A, B. Chaque noeud A, B communique ainsi sa carte de connectivité à un ensemble R_{sA}, respectivement R_{sB}, de noeuds qui sont ses rendez-vous serveurs.

La figure 2C est une représentation de l'étape de calcul des recommandations. A partir des cartes de connectivités reçues de ses rendez-vous clients Rc, un rendez-vous serveur Rs détermine, pour l'ensemble des paires de noeuds constituées par ses rendez-vous clients, les noeuds intermédiaires à utiliser pour transmettre des flux de données dans de meilleures conditions. La figure 2C illustre l'opération réalisée par un rendez-vous serveur que A et B ont en commun et qui, à partir des cartes de connectivité reçues de ces deux noeuds A et B, peut déterminer quels noeuds relais fournissent des performances meilleures que sur le chemin direct (dans cet exemple, un délai plus faible) entre les noeuds A et B. Lors de cette étape, on combine les deux cartes de connectivité du couple de noeuds considéré (K_{A} et K_{B} pour les noeuds A et B), et on génère une table unique K_{AB} comportant les résultats de cette combinaison (dans cet exemple, il s'agit d'une somme de délais, en millisecondes). Par exemple, dans la figure 2C, le noeud N_{4,4} (quatrième ligne, quatrième colonne) est le meilleur noeud relai puisqu'il fournit le délai le plus faible (110ms). Utiliser ce noeud relai plutôt que le chemin direct entre A et B (200ms) permet donc de réduire le délai nécessaire pour acheminer des communications entre ces deux noeuds.

La figure 2D schématise l'étape de transmission des recommandations d'un rendez-vous serveur vers les noeuds A, B. Le rendez-vous serveur commun aux noeuds A et B transmet à ces deux noeuds un message incluant, entre autres, la recommandation leur indiquant que le meilleur noeud relai à utiliser pour communiquer est le noeud C.

Ce mécanisme permet notamment de réduire l'empreinte réseau (ou overhead) dû à la dissémination des informations contrôlées et gérées tout en garantissant que les meilleurs choix à deux sauts pourront être réalisés. En revanche, cette approche ne traite pas de l'étape préalable de monitoring de liens qui peut être optimisée afin de réduire la quantité de bande passante nécessaire pour monitorer l'état du réseau.

Pour un réseau overlay de N noeuds, l'approche de base décrite dans l'art antérieur nécessite, dans chaque noeud de monitorer pour chaque période les N-1 liens et d'envoyer ces informations aux N-1 noeuds du réseau. L'empreinte est de N². L'article précité propose une méthode de l'ordre de N√N.

Le document US 5 870 540 divulgue un procédé qui permet d'adapter la fréquence à laquelle un serveur monitore les liens réseaux vers plusieurs clients en fonction de la quantité de trafic injectée dans le réseau, ainsi que la charge subie par le serveur, pour l'opération de monitoring. Il s'applique en particulier à la détection de coupure des liens réseau.

Un des objectifs de la présente invention est notamment d'optimiser à la fois la phase de monitoring et la phase de dissémination des informations afin de réduire l'empreinte réseau et donc d'augmenter la bande passante disponible pour les utilisateurs, pour parvenir à une empreinte réseau due à la (collecte et à la) dissémination plus faible que l'approche précitée. L'invention permet cependant d'optimiser le mécanisme de dissémination, bien plus consommateur de bande passante, indépendamment du fait que le mécanisme de monitoring soit optimisé ou non optimisé (pas d'ajustement des fréquences).

L'objectif de l'invention est de coupler le procédé de monitoring à celui de dissémination pour réduire la charge sur le réseau. Le procédé permet de mettre en place le monitoring d'un sous ensemble des liens à haute fréquence en fonction de leur utilisation et de leur qualité de service, le reste des liens étant monitoré à une fréquence plus basse. L'invention fonctionne avec un mécanisme de notification entre les rendez-vous serveurs et leurs rendez-vous clients. Les rendez-vous servers agrègent les informations de monitoring et décident des meilleures routes que les rendez-vous clients doivent utiliser. Ils notifient leurs rendez-vous clients des liens à monitorer en fonction de l'utilisation qu'ils en font.

L'invention concerne un procédé d'optimisation, comme celui de la revendication 1, de la dissémination d'informations de qualité de liens dans un réseau overlay comportant plusieurs noeuds Ni, Nj, dont plusieurs noeuds sont des noeuds rendez-vous serveurs Rs, au moins un noeud rendez-vous client A et au moins un noeud rendez-vous client B, dans lequel chaque noeud rendez-vous client contrôle et effectue des mesures sur les liens qu'il possède avec les noeuds du réseau en utilisant plusieurs valeurs de fréquence Fi, la liste Gᵢ, des liens à monitorer à une valeur de fréquence donnée étant établie par les noeuds rendez-vous serveurs.

Selon une variante de réalisation, un noeud rendez-vous client joue, par exemple, aussi un rôle de noeud rendez-vous serveur.

L'objet de l'invention concerne aussi un procédé d'optimisation de la dissémination d'informations de qualité de liens dans un réseau overlay comportant plusieurs noeuds Ni, Nj, dont plusieurs noeuds sont des noeuds rendez-vous serveurs Rs, au moins un noeud rendez-vous client A et au moins un noeud rendez-vous client B, un noeud pouvant jouer le rôle de rendez-vous serveur ou de rendez-vous client, un noeud rendez-vous client étant un noeud qui va déterminer la meilleure route entre une paire de noeuds rendez-vous client, les noeuds du réseau overlay étant organisés sous forme de grille dans laquelle les noeuds d'une même ligne ou d'une même colonne sont rendez-vous serveurs et rendez-vous clients les uns des autres, ledit procédé comportant :
- une étape où un noeud rendez-vous serveur Rs détermine au moins un premier sous-ensemble G₁ de noeuds dont la probabilité d'être utilisés pour les communications entre les rendez-vous clients A et B est grande et au moins un deuxième sous-ensemble G₂ de noeuds ayant une faible probabilité d'être utilisés pour les communications entre les rendez-vous clients A et B à un instant donné,
- une étape de notification où le noeud rendez-vous serveur Rs transmet aux noeuds rendez-vous clients A et B, une liste des liens L_{A,i} appartenant au premier sous-ensemble G₁ vers lesquels les liens L_{A,i}, L_{B,j} sont à monitorer à une première fréquence F₁, l'état des autres liens étant à monitorer à une deuxième fréquence F₂ inférieure à la première fréquence F₁, de sorte que le noeud A monitore à la première fréquence F₁ l'état de tous les liens L_{A,i} pour lesquels il reçoit une notification de la part du noeud rendez-vous serveur et monitore à la deuxième fréquence F₂ l'état de tous les liens L'_{A,i} pour lesquels il ne reçoit pas de notification, et de sorte que le noeud B monitore à la fréquence F₁ l'état de tous les liens L_{B,i}, pour lesquels il reçoit une notification de la part du noeud rendez-vous serveur et monitore à une fréquence F₂ l'état de tous les liens L'_{B,i} pour lesquels il ne reçoit pas de notification,
- une première étape de dissémination d'état de liens exécutée à ladite première fréquence F₁ dans laquelle seules les informations de qualité sur les liens L_{A,i}, L_{B,j} selon le premier sous-ensemble G₁ sont transmises d'un noeud A, B vers le noeud rendez-vous serveur Rs ayant demandé cette information lors de l'étape de notification,
- une première étape de génération d'une table ou carte de connectivité K_{AF1}, K_{BF1}, relative à chaque noeud rendez-vous client A et B contenant les mesures requises par le noeud rendez-vous serveur effectuées à la première fréquence F₁ par chaque noeud rendez-vous client A et B vers les noeuds du réseau à son ensemble G₁,
- une deuxième étape de dissémination d'état de liens exécutée à ladite deuxième fréquence F₂ où l'ensemble des informations de qualité des autres liens L'_{A,i}, L'_{B,j} est remontée des noeuds A, B vers tous les rendez-vous serveurs Rs,
- une deuxième étape de génération, à la suite de la deuxième étape de dissémination, d'une table ou carte de connectivité K_{AF2}, K_{BF2}, contenant les mesures sur liens associés à tous les noeuds du réseau,
- une étape de calcul de recommandations où chaque noeud rendez-vous serveur commun au noeud A et au noeud B détermine la meilleure route ou le meilleur chemin à deux sauts comprenant un unique noeud intermédiaire pour acheminer les communications du noeud A vers le noeud B, le meilleur chemin étant déterminé en utilisant les mesures de qualité réalisées sur tous les liens du réseau et récupérées lors de chaque étape de dissémination, en combinant les cartes de connectivité K_{AF1}, K_{AF2}, K_{BF1}, K_{BF2} reçues du noeud A et du noeud B et en obtenant dans une table résultante K_{AB} la caractéristique des chemins qui lient les noeuds A et B en passant par chaque autre noeud du réseau et qui permet d'identifier les noeuds relais offrant les performances meilleures que celles trouvées sur la connectivité directe entre le noeud A et le noeud B,
- une étape de transmission des recommandations où chaque rendez-vous serveur commun au noeud A et au noeud B envoie, après chaque étape de dissémination à chacun de ses rendez-vous client A, B, une recommandation indiquant le noeud intermédiaire à utiliser comme relai pour obtenir une route ou chemin à deux sauts qui offre de meilleures propriétés que la connexion directe pour joindre A et B.

Le meilleur chemin déterminé pour les noeuds rendez-vous client est, par exemple, une route à deux sauts comprenant un unique noeud intermédiaire.

Pour déterminer un sous-ensemble G₁, G₂, on peut considérer les n noeuds qui offrent les plus petits délais entre A et B.

Une autre possibilité pour déterminer un sous-ensemble G₁, un rendez-vous serveur utilise, par exemple, comme critère le délai RTT de temps de parcours entre un noeud A, B et un noeud du réseau.

Pour déterminer le sous-ensemble de noeuds G₁, un rendez-vous serveur peut aussi utiliser comme critère le taux de perte et/ou la valeur de la bande passante.

Pour déterminer les sous-ensembles de noeuds G₁, un rendez-vous serveur peut aussi utiliser comme critère la stabilité d'un lien L_{A,i}, L_{B,j} ou le coût du lien, ou le niveau de sécurité du lien, ou plus généralement une métrique composite d'un ensemble de critères de qualité ou de stabilité/coût/sécurité.

Selon une variante de réalisation, un noeud rendez-vous serveur détermine un ensemble de noeuds intermédiaires en utilisant comme critère la valeur du délai de temps aller-retour RTT et un noeud rendez-vous serveur transmet aux noeuds rendez-vous clients cette information.

On utilise, par exemple, un réseau ayant une structure où les rendez-vous serveurs sont situés sur une même ligne et une même colonne qu'un noeud A, B ou un réseau de type DHT, serveur central.

Selon une variante de réalisation, on fait varier les valeurs des fréquences de monitoring des liens en fonction de la nature du réseau, ou de l'objectif de l'ingénierie de trafic, ou d'événements intervenant dans le réseau.

L'invention concerne aussi un dispositif d'optimisation, comme celui de la revendication 10, de la dissémination d'informations de qualité de liens dans un réseau overlay comportant plusieurs noeuds Ni, Nj, dont plusieurs noeuds sont des rendez-vous serveurs Rs, au moins un noeud rendez-vous client A et au moins un noeud rendez-vous client B un noeud pouvant jouer le rôle noeud rendez-vous serveur ou de noeud rendez-vous client, un noeud rendez-vous client étant un noeud qui va déterminer la meilleure route entre une paire de noeuds rendez-vous client, caractérisé en ce qu'il comporte au moins les éléments suivants :
Pour un noeud rendez-vous serveur
   - un module de communication,
   - une base de données comprenant au moins un premier sous-ensemble G₁ de noeuds dont la probabilité d'être utilisés pour des communications entre A et B est grande et au moins un deuxième sous-ensemble G₂ de noeuds ayant une faible probabilité d'être utilisés pour les communications entre les rendez-vous clients A et B à un instant donné,
   - un module de contrôle d'optimisation selon les étapes du procédé,
   - un module de contrôle du mécanisme de notification, adapté à transmettre aux noeuds rendez-vous clients A et B, une liste des noeuds appartenant au premier sous-ensemble G₁ vers lesquels les liens L_{A,i}, L_{B,j} sont à monitorer à une première fréquence F₁, l'état des autres liens étant à monitorer à une deuxième fréquence F₂ inférieure à la première fréquence F₁, de sorte que le noeud A monitore à la première fréquence F₁ l'état de tous les liens L_{A,i}, pour lesquels il reçoit une notification de la part du noeud rendez-vous serveur et monitore à la deuxième fréquence F₂ l'état de tous les liens L'_{A,i} pour lesquels il ne reçoit pas de notification, et de sorte que le noeud B monitore à la fréquence F₁ l'état de tous les liens L_{B,i}, pour lesquels il reçoit une notification de la part du noeud rendez-vous serveur et monitore à une fréquence F₂ l'état de tous les liens L'_{B,i} pour lesquels il ne reçoit pas de notification,
   - un module adapté à contrôler la diffusion des recommandations de route, où chaque noeud rendez-vous serveur, commun au noeud A et au noeud B, détermine la meilleure route ou le meilleur chemin à deux sauts comprenant un unique noeud intermédiaire pour acheminer les communications du noeud A vers le noeud B, le meilleur chemin étant déterminé en utilisant les mesures de qualité réalisées sur tous les liens du réseau et récupérées lors de chaque étape de dissémination, en combinant les cartes de connectivité K_{AF1}, K_{AF2}, K_{BF1}, K_{BF2} reçues du noeud A et du noeud B et en obtenant dans une table résultante K_{AB} la caractéristique des chemins qui lient les noeuds A et B en passant par chaque autre noeud du réseau et qui permet d'identifier les noeuds relais offrant les performances meilleures que celles trouvées sur la connectivité directe entre le noeud A et le noeud B, le module de contrôle de diffusion des recommandations communiquant par l'intermédiaire du module de communication et du module de communication,

   - un module, de contrôle de l'état des liens une base de données,
   - un module de définition et de contrôle de la structure du réseau overlay,
   - une base de données contenant une table des noeuds du réseau overlay qui est connue du contrôleur.
Pour un noeud rendez-vous client:
   - un module de communication,
   - un module de contrôle d'optimisation du monitoring des liens et de la dissémination d'état de liens au niveau des noeuds, adapté à exécuter une première étape de dissémination d'état de liens exécutée à ladite première fréquence F₁ dans laquelle seules les informations sur les liens L_{A,i}, L_{B,j} selon le premier sous-ensemble G₁ sont transmises d'un noeud A, B vers un noeud rendez-vous serveur Rs ayant demandé cette information, une deuxième étape de dissémination d'état de liens exécutée à ladite deuxième fréquence F₂ où l'ensemble des informations de qualité des autres liens L'_{A,i}, L'_{B,j} est remonté des noeuds A, B vers les noeuds rendez-vous serveurs Rs, une base de données contenant des paramètres de la stratégie de dissémination des informations,
   - une table de routage,
   - un module de contrôle des notifications qui va récupérer les ordres/messages de notification émis par un noeud rendez-vous serveur,
   - une base de données comprenant les notifications émises par un noeud rendez-vous serveur,
   - un module, de contrôle des recommandations et une base de données comprenant les tables de recommandation dans le choix des noeuds à utiliser,
   - un module, de mesure et contrôle de l'état des liens stockés dans la base de données d'état des liens, adapté à générer une première étape de génération d'une table ou carte de connectivité K_{AF1}, K_{BF1}, relative à chaque noeud rendez-vous client A et B contenant les mesures requises par le noeud rendez-vous serveur effectuées à la première fréquence F₁ par chaque noeud rendez-vous client A et B vers les noeuds du réseau à son ensemble G₁ et une deuxième table ou carte de connectivité K_{AF2}, K_{BF2}, contenant les mesures sur liens associés à tous les noeuds du réseau,
   - un module de contrôle de monitoring,
   - un module de contrôle de structure du réseau overlay adapté à définir l'agencement des noeuds mémorisés dans une base de données. Des modes de réalisation préférés sont couverts par les revendications dépendantes.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, une représentation d'un réseau overlay selon l'invention,
- Les figures 2A, 2B, 2C, 2D, une illustration des étapes d'un procédé selon l'art antérieur,
- Les figures 3A, 3B, les étapes de détermination des sous-ensembles des noeuds à monitorer à des fréquences différentes,
- Les figures 4A, 4B, 4C, les étapes pour déterminer le meilleur chemin, et
- La figure 5A schématise un exemple d'architecture des modules d'un noeud rendez-vous serveur, et la figure 5B un exemple d'architecture d'un noeud rendez-vous client.

L'exemple qui suit illustre le fonctionnement du procédé selon l'invention. Il est donné dans le cas où les noeuds du réseau overlay sont organisés sous forme de grille dans laquelle les noeuds d'une même ligne/colonne sont rendez-vous serveurs Rs et rendez-vous clients Rc les uns des autres.
Le procédé selon l'invention repose sur une adaptation dynamique de la stratégie de « monitoring » des connexions et de la stratégie de « dissémination » des informations monitorées permettant à chaque noeud :
- de maintenir des informations sur l'état des liens et leur utilisation,
- d'échanger ces informations avec certains autres noeuds pour construire une vue de la topologie du réseau overlay incluant les informations associées aux liens,
- de déterminer selon les contraintes des différents flux, les chemins les mieux adaptés pour les transmettre,
- de mettre ainsi en oeuvre les politiques d'acheminement choisies tout en réduisant l'empreinte réseau.

On considère, dans l'exemple donné pour illustrer le procédé mis en oeuvre par l'invention, un couple de noeuds source/destination, A et B et on va regarder la qualité des routes à deux sauts. Les noeuds rendez-vous serveurs sont, dans le présent exemple, des noeuds situés sur la même ligne et la même colonne qu'un noeud donné. Une autre structure logique pouvant être utilisée est, par exemple, une table de hâchage distribuée (plus connue sous l'abréviation anglo-saxonne DHT pour « Distributed Hash Table »). Un unique serveur central, dans ce cas appelé rendez-vous serveur, auquel tous les noeuds, dits alors rendez-vous clients, enverraient leurs informations d'état de liens pourrait également être utilisé.

Pour la paire de noeuds A, B, un rendez-vous serveur va, dans un premier temps, déterminer les performances offertes par toutes les routes à deux sauts entre ces deux noeuds, en combinant leurs cartes de connectivité.

Le procédé consiste ensuite à générer, pour chaque paire de noeuds A, B, un premier sous-ensemble G₁ de noeuds du réseau et un deuxième sous-ensemble G₂ de noeuds, à partir du résultat de la combinaison de leurs cartes de connectivité.

Le premier sous-ensemble G₁ de noeuds comporte les noeuds qui ont de forte chance d'être choisis comme meilleur noeud intermédiaire pour faire transiter les flux de données entre A et B. Le deuxième sous-ensemble G₂ de noeuds est composé des noeuds qui ont une faible chance de servir de noeud intermédiaire. Il est également possible de constituer plus de deux sous-ensembles.

Pour élaborer ces deux sous-ensembles, le procédé peut utiliser plusieurs méthodes. Une première méthode consiste à déterminer une répartition des noeuds dans ces sous-ensembles. Par exemple, on classe les N noeuds dans l'ordre croissant selon la métrique choisie (par exemple dans l'ordre des délais qu'ils offrent comme noeud intermédiaire) et on décide que n de ces noeuds appartiennent au sous-ensemble G₁ et que N-n de ces noeuds appartiennent au sous-ensemble G₂ On peut également prévoir que cette répartition soient adaptés au fil du temps. Les n noeuds sont, par exemple, ceux qui offrent les plus petits délais entre A et B. Une autre manière de procéder serait de fixer un seuil, les noeuds pour lesquels le résultat de la combinaison est sous le seuil font partie d'un premier sous-ensemble et les autres noeuds font partie du second sous-ensemble. Ce seuil peut être adapté au cours du temps.

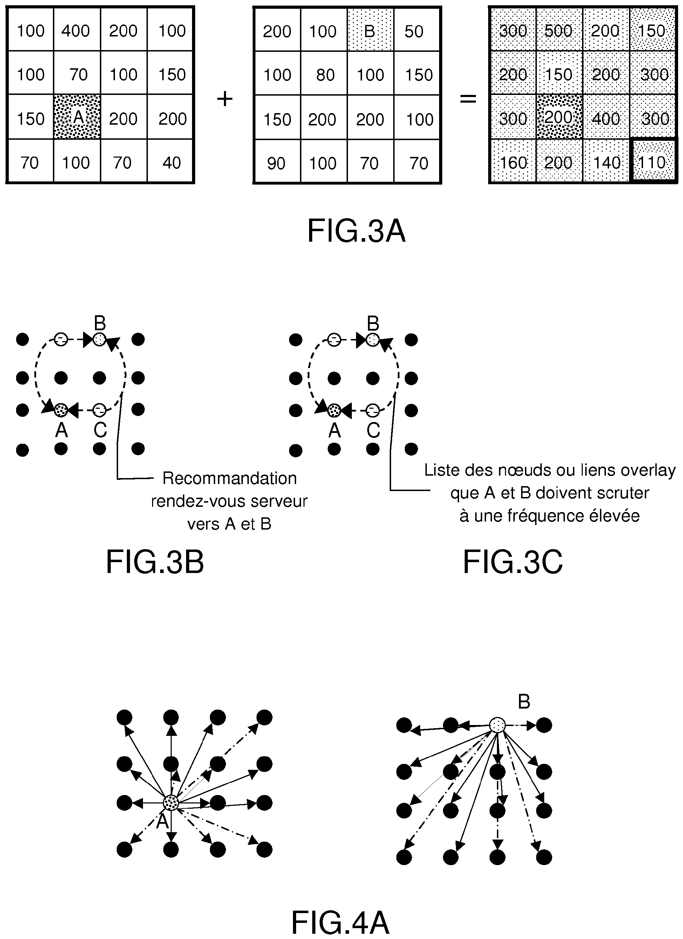

La figure 3A schématise une étape à laquelle chaque rendez-vous serveur Rs détermine les sous-ensembles de noeuds. Cette étape suit l'étape du calcul des meilleurs chemins à deux sauts pour leurs noeuds rendez-vous clients respectifs A et B. Tout comme à la figure 2C, cette phase consiste à combiner les tableaux K_{A} et K_{B} afin d'obtenir dans une table résultante K_{AB} la caractéristique des chemins qui lient les noeuds A et B en passant par chaque autre noeud du réseau. Un rendez-vous serveur Rs classifie ensuite les noeuds intermédiaires selon les valeurs correspondantes dans la table K_{AB}. Ces valeurs représentent, par exemple, le temps aller-retour (RTT) sur le chemin considéré, sa stabilité, sa capacité (bande passante), ou toute autre métrique qui se composerait de ces différents indicateurs. Cette classification permet ainsi de déterminer quels noeuds font partie du sous-ensemble G₁ et quels autres noeuds font parti d'un autre sous-ensemble G₂. Un rendez-vous serveur Rs n'a besoin que d'un sous-ensemble de mesures d'état des liens pour choisir le meilleur noeud intermédiaire utilisé pour transmettre des informations entre les noeuds A et B. Selon l'exemple, les noeuds ayant pour valeurs résultantes 110ms, 140ms, 150ms et 160ms sont les noeuds qui permettraient de réduire le délai s'ils étaient utilisés comme relai entre les noeuds A et B. Ils constituent, par exemple, le sous-ensemble G₁ puisqu'ils se situent sous la valeur seuil du délai sur le chemin direct entre A et B (à 200ms). Les liens entre A et ces noeuds (respectivement, B et ces noeuds) seront alors monitorés à une fréquence plus élevée. Les autres noeuds font partie du sous-ensemble G₂, et les liens correspondants seront monitorés moins fréquemment.

Selon l'évolution des mesures collectées, et donc des valeurs contenues dans la table résultante K_{AB}, le seuil définissant l'appartenance d'un noeud à l'un ou l'autre des sous-ensembles, ou la règle de répartition des noeuds dans ces sous-ensemble peuvent être adaptés en cours de fonctionnement. La figure 3B représente l'étape de recommandation au cours de laquelle un rendez-vous serveur R_{sA}, R_{sB} va transmettre à un rendez-vous client A, B l'information du meilleur noeud relai à utiliser pour joindre chaque autre noeud destination parmi ses rendez-vous clients.

La figure 3C schématise l'étape de notification où un noeud rendez-vous serveur Rs va transmettre à ses noeuds rendez-vous client R_{cA}, R_{cB} une liste comprenant les noeuds qui doivent être monitorés par les noeuds rendez-vous client à une plus haute fréquence, fréquence F₁. Un rendez-vous serveur Rs notifie ainsi à ses rendez-vous client son intérêt à recevoir fréquemment les états des liens vers les noeuds qui ont le plus de chance d'être sélectionnés comme noeuds intermédiaires. En conséquence, les noeuds rendez-vous clients monitorent et envoient les états de liens concernés (en général, ceux où la métrique est la meilleure et la plus stable) à une plus haute fréquence. Le mécanisme de notification régulière permet aussi d'ajuster la phase de monitoring de chaque noeud en modulant la fréquence de mesure selon l'utilisation qui est faite de son résultat. Ce mécanisme permet aussi d'ajuster la dissémination des informations de monitoring en n'envoyant que les informations mises à jour et nécessaires à chaque rendez-vous serveur Rs.

Pour un noeud A, si l'ensemble de liens qui le relient à des noeuds appartenant à G₁, à monitorer à une fréquence élevée, est plus grand que l'ensemble de liens qui le relient à des noeuds appartenant à G₂, à monitorer à une fréquence plus faible, il sera alors plus efficace d'envoyer les identifiants de ce second ensemble. La figure 4A schématise une étape de monitoring modifiée pour les deux noeuds A et B suivant les étapes du procédé selon l'invention.

Chaque noeud A, B va « monitorer » les liens qu'il possède avec les autres noeuds du réseau mais à deux fréquences différentes, F₁ et F₂ selon l'appartenance d'un noeud Ni, Nj au sous-ensemble G₁ ou au sous-ensemble G₂.

Le noeud A va monitorer à une fréquence F₁ tous les liens L_{A,i}, pour lesquels il aura reçu une notification de la part d'un de ses rendez-vous serveurs RsA (en général, liens qu'il possède avec les noeuds appartenant au sous-ensemble G₁), et va monitorer à une fréquence F₂ inférieure à F₁, tous les liens L'_{A,i} pour lesquels il n'a pas reçu de notification. Ainsi, l' « overhead » dû au monitoring peut être modulé selon l'état du réseau, et réduit dans le cas où certains liens offrent des mauvaises performances et sont donc peu utilisés dans le calcul des recommandations. De même, le noeud B va monitorer à une fréquence F₁, tous les liens L_{B,j} (correspondant au sous-ensemble G₁) pour lesquels il aura reçu une notification de la part d'un de ses rendez-vous serveurs R_{sB}, et à une fréquence F₂ inférieure à F₁, tous les liens L'_{B,j} pour lesquels il n'a pas reçu de notification.

La valeur des fréquences F₁ et F₂ avec lesquelles un noeud va monitorer les liens du réseau dépend, par exemple, de la nature du réseau et/ou de l'objectif d'ingénierie de trafic. Lorsque le réseau est dit instable, c'est-à-dire lorsque les résultats des mesures fluctuent énormément, alors la fréquence de monitoring peut être plus importante afin de prendre en compte la variation de la qualité des liens entre les noeuds. Dans le cas d'un réseau stable, les résultats des mesures sont relativement stables, et la fréquence de monitoring peut être plus faible puisque la qualité des liens varie très peu.

La phase de dissémination des états des liens comporte par exemple les deux phases suivantes :
1) à une fréquence F₁=1/T₁, un rendez-vous client n'envoie à un noeud rendez-vous serveur que les états des liens L_{A,i}, L_{B,j} qui lui ont été demandés par ce rendez-vous serveur lors de la phase de notification,
2) à une fréquence F₂=1/T₂, chaque rendez-vous client envoie tous ses états de liens à tous ses rendez-vous serveurs.
Ainsi, l'overhead de dissémination de l'information de monitoring est réduit car seules les informations d'intérêt sont transmises à des instants donnés.

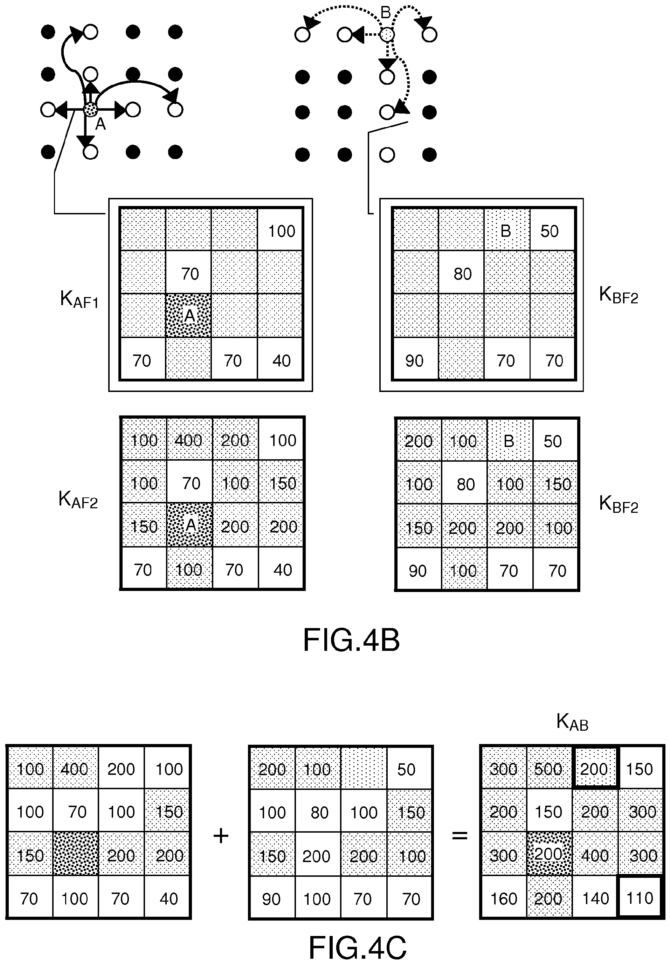

La figure 4B schématise l'étape d'échange des informations pour le monitoring.

Le noeud A, transmet, dans un premier temps, à une première fréquence F₁, les mesures caractéristiques des liens au rendez-vous serveur qui a demandé à recevoir la mesure. Ceci conduit à générer une première table K_{AF1} relative au noeud A et contenant les mesures requises par un noeud rendez-vous serveur et effectuées à la fréquence F₁ par le noeud A vers les noeuds du réseau qui appartiennent au sous-ensemble G₁. Le tableau K_{AF1} contient donc les résultats des mesures sur les liens les plus utilisés, c'est-à-dire qui relient ce noeud A aux noeuds qui ont la plus forte chance de servir comme noeud intermédiaire dans la transmission des flux de données. Dans l'exemple de la figure 4B, le tableau K_{AF1} pour le noeud A contient les valeurs de délai 100ms, 70 ms, 70ms, 70 ms, 40ms pour les noeuds N14, N22, N41, N43, N44 respectivement.

De la même façon le noeud B transmet à son rendez-vous serveur R_{sB} ayant demandé à obtenir des informations sur l'état des liens, les résultats des mesures qu'il a effectués sur les liens vers les différents noeuds appartenant au sous-ensemble G₁. Le tableau K_{BF1} correspondant au noeud B contient les valeurs de délai 50ms, 80 ms, 90 ms, 70 ms, 70ms pour les noeuds N14, N22, N41, N43, N44 respectivement.

Dans un deuxième temps, toutes les mesures de qualité réalisées pour tous les liens, quelque soit l'appartenance du noeud au sous-ensemble G₁ ou au sous-ensemble G₂, sont transmises à tous les rendez-vous serveurs R_{sA}, R_{sB} à la fréquence F₂ ou 1/T₂, avec T₂>T₁. Ceci conduit à deux nouveaux tableaux K_{AF2}, K_{BF2}, pour le noeud A et pour le noeud B respectivement, qui contiennent les mesures des délais sur les liens associés à tous les noeuds du réseau.

A partir de ces deux derniers tableaux K_{AF2}, K_{BF2}, chaque rendez-vous serveur va déterminer le meilleur chemin à deux sauts pour les noeuds A, B et classifier les noeuds intermédiaires selon un critère donné. Ce critère correspond, par exemple, au plus petit délai RTT, à la stabilité du réseau, à sa capacité, etc.

Un rendez-vous serveur n'attend pas la dissémination à la fréquence F₂ pour recalculer les chemins et envoyer des recommendations. Le calcul se fait à la fin de chaque étape de dissémination ; les valeurs qui sont monitorées à la fréquence F₂ restent simplement identiques pour des itérations à la fréquence F₁ si une itération à la fréquence F₂ n'est pas intervenue entre les deux.

Sur l'exemple donné à la figure 4C, dans le tableau K_{AB} résultant de la combinaison des tableaux K_{AF2}, K_{BF2}, on peut voir que le noeud intermédiaire Ni recommandé est le noeud N_{4,4} car il offre la plus petite valeur de délai (100ms). Le procédé va aussi sélectionner un sous-ensemble G₁ de noeuds du réseau qui présentent un intérêt dans ce choix, c'est-à-dire qui sont susceptibles de devenir des noeuds intermédiaires. Chaque rendez-vous serveur Rs notifie aux noeuds clients ce sous-ensemble.

Un noeud peut être à la fois un noeud rendez-vous serveur et un noeud rendez-vous client. Selon la structure logique que l'on considère, un noeud client peut même être son propre serveur, c'est à dire qu'il a toutes les informations pour calculer le meilleur chemin à deux sauts avec un ou plusieurs autres noeuds.

La proportion de noeuds sélectionnés pour être monitorés à une fréquence plus élevée peut être ajustée au cours du temps. Si le réseau est très stable, les mesures varient peu dans le temps. La proportion pourra être faible, par exemple, les 10% des meilleurs noeuds selon le critère considéré. Au contraire, si le réseau est instable, c'est-à-dire, si les mesures varient très fortement dans le temps, cette même proportion de noeuds devra être grande, par exemple, 80%, afin que les rendez-vous serveurs puissent trouver la meilleure route à deux sauts. Dans le cas où un rendez-vous serveur notifie à un rendez-vous client de monitorer à fréquence élevée l'ensemble des noeuds du réseau, l'overhead généré sera alors égal à celui de l'état de l'art modulo l'overhead introduit par les notifications (cependant très faible puisque seuls des identifiants de noeuds sont envoyés).

Un client peut également faire varier F₁ et F₂ en fonction de la stabilité du réseau reportée par le rendez-vous serveur. Si rien ne change dans l'overlay, F₁ et F₂ peuvent décroitre jusqu'à un minimum imposé par configuration. La décroissance peut être linéaire en fonction du temps. Lorsqu'une perturbation impactant un client est observée par le rendez-vous serveur, cela peut lui être indiqué par notification. Le client rétablit alors F₁ et F₂ à leurs niveaux initiaux.

Sans sortir du cadre de l'invention, l'exemple donné pour le procédé selon l'invention avec deux fréquences peut être mis en oeuvre avec k fréquences.

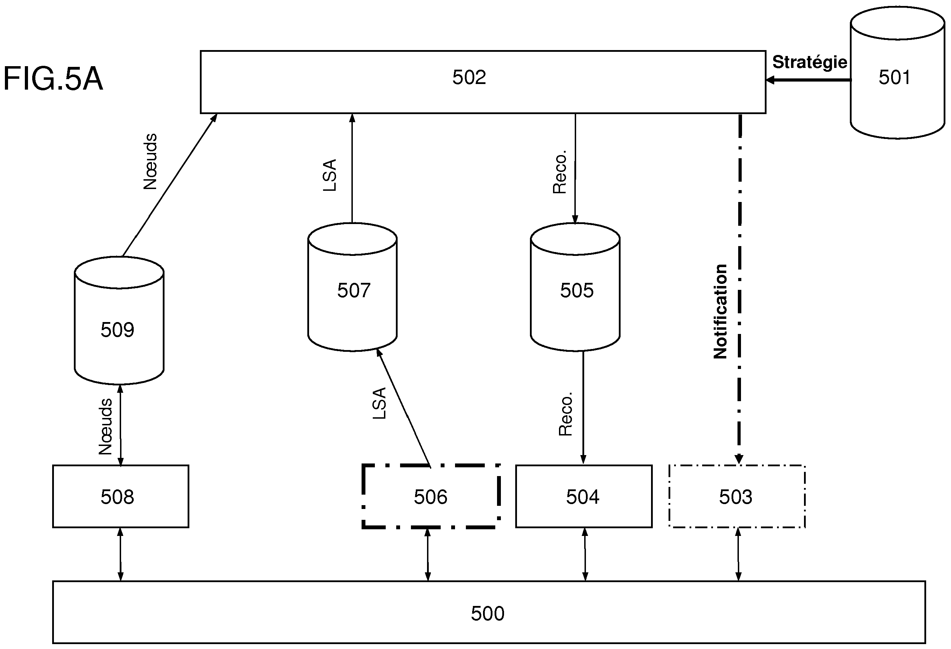

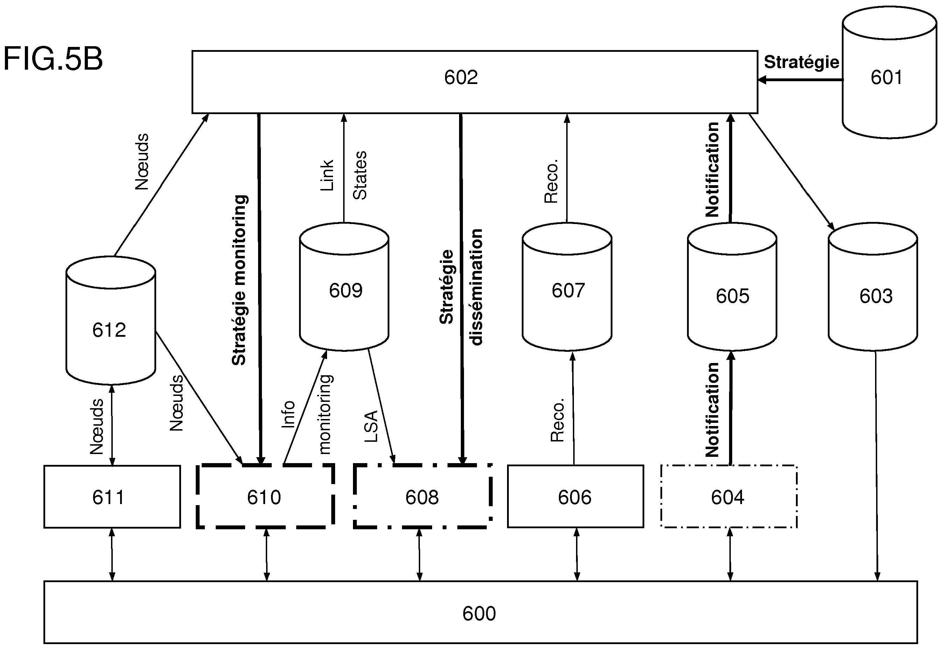

Dans l'exemple qui suit donné aux figures 5A et 5B, l'ensemble des noeuds peuvent jouer les rôles de rendez-vous serveur et de rendez-vous client simultanément (c'est le cas dans l'exemple d'organisation sous forme de grille). Ces deux architectures sont alors confondues.

La figure 5A schématise un exemple d'architecture pour un noeud rendez-vous serveur selon la présente invention. Un noeud rendez-vous serveur comporte au moins les modules suivants :
- un module de communication 500,
- une base de données 501 comprenant les paramètres associés à la stratégie mise en oeuvre par le procédé, par exemple, le choix des fréquences à utiliser, le nombre de sous-ensembles de noeuds ou sous-classes choisis,
- un module 502 de contrôle d'optimisation selon l'invention,
- un module 503 de contrôle du mécanisme de notification qui envoie les messages de notification aux rendez-vous clients,
- un module 504 adapté à contrôler la diffusion des recommandations stockées dans une base de données 505 de recommandations, qu'un noeud rendez-vous serveur transmet aux noeuds rendez-vous client,
- un module 506, de contrôle de l'état des liens ou LSA (Link state ..) qui reçoit les LSA des rendez-vous clients et transmet l'état des liens à une base de données 507, l'état des liens étant aussi connu du module d'optimisation,
- un module 508 de définition et de control de la structure du réseau overlay, par exemple, le module peut consister en une répartition des noeuds dans la structure réseau,
- une base de données 509 contenant une table des noeuds du réseau overlay qui est connue du contrôleur.

La figure 5B schématise une architecture d'un noeud rendez-vous client comportant au moins les éléments suivants :
- un module de communication 600, le module de communication 600 d'un rendez-vous client communique avec tous les noeuds du réseau, nécessaire pour le fonctionnement du module 610, et avec le module de communication 500 de ses rendez-vous serveurs. Symétriquement le module de communication 500 communique avec tous les modules de communication 600 de ses rendez-vous clients,
- un module 601 de contrôle d'optimisation du monitoring des liens et de la dissémination des informations au niveau des noeuds,
- une base de données 602 contenant comme la base 501 les paramètres de la stratégie de dissémination des informations,
- une table de routage 603 comprenant les recommandations de routage transmises des rendez-vous serveurs vers les noeuds rendez-vous client,
- un module 604 de contrôle des notifications qui va récupérer les ordres/messages de notification émis par un noeud rendez-vous serveur,
- une base de données 605 comprenant les notifications émises par un noeud rendez-vous serveur,
- un module 606, de contrôle des recommandations et une base de données 607 comprenant les tables de recommandation dans le choix des noeuds à utiliser pour obtenir le meilleur chemin pour la transmission d'informations d'un premier noeud vers un deuxième noeud,
- un module 608, de mesure et contrôle de l'état des liens stockés dans la base de données 609 d'état des liens, le module de contrôle 608 reçoit du contrôleur d'optimisation, une information sur la stratégie de dissémination adoptée, l'information pouvant être la valeur et le nombre des fréquences utilisées pour scruter les noeuds,
- un module de contrôle de monitoring 610 a notamment pour fonction lors de l'étape de monitoring de mesurer l'état des liens en tenant compte d'une information de stratégie de monitoring transmis par le contrôleur d'optimisation, cette information peut être la valeur des fréquences qui sont utilisées pour le monitoring,
- un module 611 de contrôle de structure du réseau overlay ayant notamment pour fonction de définir l'agencement des noeuds, les noeuds étant mémorisés dans une base de données 612.

Le procédé et le dispositif selon l'invention permettent notamment d'optimiser le maintien d'une vue de la topologie du réseau overlay incluant des indicateurs de performances associés aux liens logiques pour réaliser de l'ingénierie de trafic et ainsi :
- tirer parti au mieux des ressources disponibles dans ces différents réseaux,
- réduire les coûts de réservation en mettant en oeuvre un routage adaptatif,
- assurer l'acheminement des flux critiques en cas de panne ou de menace.

## Revendications

1. Procédé d'optimisation de la dissémination d'informations de qualité de liens dans un réseau overlay comportant plusieurs noeuds Ni, Nj, dont plusieurs noeuds sont des noeuds rendez-vous serveurs Rs, au moins un noeud rendez-vous client A et au moins un noeud rendez-vous client B, un noeud pouvant jouer le rôle de rendez-vous serveur ou de rendez-vous client, un noeud rendez-vous client étant un noeud qui va déterminer la meilleure route entre une paire de noeuds rendez-vous client, les noeuds du réseau overlay étant organisés sous forme de grille dans laquelle les noeuds d'une même ligne ou d'une même colonne sont rendez-vous serveurs et rendez-vous clients les uns des autres, ledit procédé comportant :
• une étape où un noeud rendez-vous serveur Rs détermine au moins un premier sous-ensemble G₁ de noeuds dont la probabilité d'être utilisés pour les communications entre les rendez-vous clients A et B est plus grande que pour les noeuds d' un deuxième sous-ensemble G₂ de noeuds
• une étape de notification où le noeud rendez-vous serveur Rs transmet aux noeuds rendez-vous clients A et B, une liste des noeuds appartenant au premier sous-ensemble G₁ vers lesquels les liens L_{A,i}, L_{B,j} sont à monitorer à une première fréquence F₁, l'état des autres liens étant à monitorer à une deuxième fréquence F₂ inférieure à la première fréquence F₁, de sorte que le noeud A monitore à la première fréquence F₁ l'état de tous les liens L_{A,i}, pour lesquels il reçoit une notification de la part du noeud rendez-vous serveur et monitore à la deuxième fréquence F₂ l'état de tous les liens L'_{A,i} pour lesquels il ne reçoit pas de notification, et de sorte que le noeud B monitore à la fréquence F₁ l'état de tous les liens L_{B,i}, pour lesquels il reçoit une notification de la part du noeud rendez-vous serveur et monitore à une fréquence F₂ l'état de tous les liens L'_{B,i} pour lesquels il ne reçoit pas de notification,
• une première étape de dissémination d'état de liens exécutée à ladite première fréquence F₁ dans laquelle seules les informations de qualité sur les liens L_{A,i}, L_{B,j} selon le premier sous-ensemble G₁ sont transmises d'un noeud A, B vers le noeud rendez-vous serveur Rs ayant demandé cette information lors de l'étape de notification,
• une première étape de génération d'une table ou carte de connectivité K_{AF1}, K_{BF1}, relative à chaque noeud rendez-vous client A et B contenant les mesures requises par le noeud rendez-vous serveur Rs effectuées à la première fréquence F₁ par chaque noeud rendez-vous client A et B vers les noeuds du réseau du sous-ensemble G1,
• une deuxième étape de dissémination d'état de liens exécutée à ladite deuxième fréquence F₂ où l'ensemble des informations de qualité des autres liens L'_{A,i}, L'_{B,j} est remonté des noeuds A, B vers tous les rendez-vous serveurs Rs,
• une deuxième étape de génération, à la suite de la deuxième étape de dissémination, d'une table ou carte de connectivité K_{AF2}, K_{BF2}, contenant les mesures sur liens associés à tous les noeuds du réseau,
• une étape de calcul de recommandations où chaque noeud rendez-vous serveur, commun au noeud A et au noeud B, détermine la meilleure route ou le meilleur chemin à deux sauts comprenant un unique noeud intermédiaire pour acheminer les communications du noeud A vers le noeud B, le meilleur chemin étant déterminé en utilisant les mesures de qualité réalisées sur tous les liens du réseau et récupérées lors de chaque étape de dissémination, en combinant les cartes de connectivité K_{AF2}, K_{BF2} reçues du noeud A et du noeud B et en obtenant dans une table résultante K_{AB} la caractéristique des chemins qui lient les noeuds A et B en passant par chaque autre noeud du réseau et qui permet d'identifier les noeuds relais offrant les performances meilleures que celles trouvées sur la connectivité directe entre le noeud A et le noeud B,
• une étape de transmission des recommandations où chaque rendez-vous serveur commun au noeud A et au noeud B envoie, après chaque étape de dissémination à chacun de ses noeuds rendez-vous clients A, B, une recommandation indiquant le noeud intermédiaire à utiliser comme relais pour obtenir une route ou chemin à deux sauts qui offre de meilleures propriétés que la connexion directe pour joindre A et B.

2. Procédé d'optimisation selon la revendication 1 **caractérisé en ce que** le meilleur chemin déterminé pour les noeuds rendez-vous client est une route à deux sauts comprenant un unique noeud intermédiaire.

3. Procédé selon la revendication 1 **caractérisé en ce que** pour déterminer un sous-ensemble G₁, G₂, on considère les n noeuds qui offrent les plus petits délais entre A et B.

4. Procédé selon la revendication 1 **caractérisé en ce que** pour déterminer le sous-ensemble G₁ un rendez-vous serveur utilise comme critère le délai RTT de temps de parcours entre un noeud A, B et un noeud du réseau.

5. - Procédé selon la revendication 1 **caractérisé en ce que**, pour déterminer le sous-ensemble de noeuds G₁, un rendez-vous serveur utilise comme critère le taux de perte et/ou la valeur de la bande passante.

6. Procédé selon la revendication 1 **caractérisé en ce que**, pour déterminer les sous-ensembles de noeuds G₁, un rendez-vous serveur utilise comme critère la stabilité d'un lien L_{A,i}, L_{B,j} ou le coût du lien, ou le niveau de sécurité du lien, ou plus généralement une métrique composite d'un ensemble de critères de qualité ou de stabilité/coût/sécurité.

7. Procédé selon l'une des revendications précédentes **caractérisé en ce qu'**un noeud rendez-vous serveur détermine un ensemble de noeuds intermédiaires en utilisant comme critère la valeur du délai de temps aller-retour RTT et **en ce qu'**un noeud rendez-vous serveur transmet aux noeuds rendez-vous clients cette information.

8. Procédé selon l'une des revendications précédentes **caractérisé en ce que** l'on utilise un réseau ayant une structure où les rendez-vous serveurs sont situés sur une même ligne et une même colonne qu'un noeud A, B ou un réseau de type DHT, serveur central.

9. Procédé selon l'une des revendications précédentes **caractérisé en ce que** l'on fait varier les valeurs des fréquences de monitoring des liens en fonction de la nature du réseau, ou de l'objectif de l'ingénierie de trafic, ou d'événements intervenant dans le réseau.

10. Dispositif d'optimisation de la dissémination d'informations de qualité de liens dans un réseau overlay comportant plusieurs noeuds Ni, Nj, dont plusieurs noeuds sont des rendez-vous serveurs Rs, au moins un noeud rendez-vous client A et au moins un noeud rendez-vous client B, un noeud pouvant jouer le rôle noeud rendez-vous serveur ou de noeud rendez-vous client, un noeud rendez-vous client étant un noeud qui va déterminer la meilleure route entre une paire de noeuds rendez-vous client, ledit dispositif d'optimisation comprenant ledit réseau overlay, chaque noeud rendez-vous serveur Rs comprenant:
• un module de communication (500),
• une base de données (501) comprenant au moins un premier sous-ensemble G₁ de noeuds dont la probabilité d'être utilisés pour des communications entre A et B est plus grande que pour les noeuds d'un deuxième sous-ensemble G2,
• un module (502) de contrôle d'optimisation selon les étapes de l'une des revendications 1 à 9,
• un module (503) de contrôle du mécanisme de notification adapté à transmettre aux noeuds rendez-vous clients A et B, une liste des noeuds appartenant au premier sous-ensemble G₁ vers lesquels les liens L_{A,i}, L_{B,j} sont à monitorer à une première fréquence F₁, l'état des autres liens étant à monitorer à une deuxième fréquence F₂ inférieure à la première fréquence F₁, de sorte que le noeud A monitore à la première fréquence F₁ l'état de tous les liens L_{A,i}, pour lesquels il reçoit une notification de la part du noeud rendez-vous serveur et monitore à la deuxième fréquence F₂ l'état de tous les liens L'_{A,i} pour lesquels il ne reçoit pas de notification, et de sorte que le noeud B monitore à la fréquence F₁ l'état de tous les liens L_{B,i}, pour lesquels il reçoit une notification de la part du noeud rendez-vous serveur et monitore à une fréquence F₂ l'état de tous les liens L'_{B,i} pour lesquels il ne reçoit pas de notification,
• un module (504) adapté à contrôler la diffusion des recommandations de route, où chaque noeud rendez-vous serveur, commun au noeud A et au noeud B, détermine la meilleure route ou le meilleur chemin à deux sauts comprenant un unique noeud intermédiaire pour acheminer les communications du noeud A vers le noeud B, le meilleur chemin étant déterminé en utilisant les mesures de qualité réalisées sur tous les liens du réseau et récupérées lors de chaque étape de dissémination, en combinant les cartes de connectivité K_{AF2}, K_{BF2} reçues du noeud A et du noeud B et en obtenant dans une table résultante K_{AB} la caractéristique des chemins qui lient les noeuds A et B en passant par chaque autre noeud du réseau et qui permet d'identifier les noeuds relais offrant les performances meilleures que celles trouvées sur la connectivité directe entre le noeud A et le noeud B, le module (504) communiquant par l'intermédiaire du module de communication (500) et du module de communication (600),
• un module (506), de contrôle de l'état des liens adapté pour transmettre état des liens à une base de données (507),
• un module (508) de définition et de contrôle de la structure du réseau overlay,
• une base de données (509) contenant une table des noeuds du réseau overlay qui est connue du module (508) de définition et de contrôle de la structure du réseau overlay,
chaque noeud rendez-vous client A, B comprenant:
• un module de communication (600),
• un module (601) de contrôle d'optimisation du monitoring des liens et de la dissémination d'état de liens au niveau des noeuds, adapté à exécuter une première étape de dissémination d'état de liens exécutée à ladite première fréquence F₁ dans laquelle seules les informations sur les liens L_{A,i}, L_{B,j} selon le premier sous-ensemble G₁ sont transmis d'un noeud A, B vers un noeud rendez-vous serveur Rs ayant demandé cette information, une deuxième étape de dissémination d'état de liens exécutée à ladite deuxième fréquence F₂ où l'ensemble des informations de qualité des autres liens L'_{A,i}, L'_{B,j} est remontée des noeuds A, B vers les noeuds rendez-vous serveurs Rs,
• une base de données (602) contenant des paramètres de la stratégie de dissémination des informations,
• une table de routage (603),
• un module (604) de contrôle des notifications qui va récupérer les ordres/messages de notification émis par un noeud rendez-vous serveur,
• une base de données (605) comprenant les notifications émises par un noeud rendez-vous serveur,
• un module (606), de contrôle des recommandations et une base de données (607) comprenant les tables de recommandation dans le choix des noeuds à utiliser,
• un module (608), de mesure et contrôle de l'état des liens stockés dans la base de données (609) d'état des liens, adapté à générer une première étape de génération d'une table ou carte de connectivité K_{AF1}, K_{BF1}, relative à chaque noeud rendez-vous client A et B contenant les mesures requises par le noeud rendez-vous serveur effectuées à la première fréquence F₁ par chaque noeud rendez-vous client A et B vers les noeuds du réseau à son ensemble G₁ et une deuxième table ou carte de connectivité K_{AF2}, K_{BF2}, contenant les mesures sur liens associés à tous les noeuds du réseau,
• un module de contrôle de monitoring (610),
• un module (611) de contrôle de structure du réseau overlay adapté à définir l'agencement des noeuds mémorisés dans une base de données (612).

## Patentansprüche

1. Verfahren zum Optimieren der Verbreitung von Qualitätsinformationen von Verbindungen in einem Overlay-Netzwerk, welches mehrere Knoten Ni, Nj besitzt, darunter mehrere Knoten, die Server-Rendezvous-Knoten Rs sind, mindestens einen Client-Rendezvous-Knoten A und mindestens einen Client-Rendezvous-Knoten B, einen Knoten, der die Rolle eines Server-Rendezvous oder eines Client-Rendezvous spielen kann, wobei ein Client-Rendezvous-Knoten ein Knoten ist, der die beste Route zwischen einem Paar von Client-Rendezvous-Knoten bestimmt, wobei die Knoten des Overlay-Netzwerks in Form eines Gitters organisiert sind, in welchem die Knoten einer gleichen Zeile oder einer gleichen Spalte füreinander jeweils als Server-Rendezvous oder als Client-Rendezvous fungieren, wobei das Verfahren Folgendes beinhaltet:
• einen Schritt, bei welchem ein Server-Rendezvous-Knoten Rs mindestens eine erste Untergruppe G₁ von Knoten bestimmt, deren Benutzungswahrscheinlichkeit für die Kommunikationen zwischen den Client-Rendezvous A und B größer ist als für Knoten einer zweiten Untergruppe G₂ von Knoten,
• einen Schritt der Meldung, bei welchem der Server-Rendezvous-Knoten Rs den Client-Rendezvous-Knoten A und B eine Liste der Knoten übermittelt, welche zur ersten Untergruppe G₁ gehören, zu welchen die Verbindungen L_{A,i}, L_{B,j} bei einer ersten Frequenz F₁ überwacht werden sollen, wobei der Status der anderen Verbindungen bei einer zweiten Frequenz F₂ überwacht werden soll, welche niedriger ist als die erste Frequenz F₁, so dass der Knoten A bei der ersten Frequenz F₁ den Status aller Verbindungen L_{A,i} überwacht, für welche er eine Meldung vom Server-Rendezvous-Knoten erhält, und bei der zweiten Frequenz F₂ den Status aller Verbindungen L'_{A,i} überwacht, für welche er keine Meldung erhält, und so dass der Knoten B bei der Frequenz F₁ den Status aller Verbindungen L_{B,i} überwacht, für welche er eine Meldung vom Server-Rendezvous-Knoten erhält, und bei der zweiten Frequenz F₂ den Status aller Verbindungen L'_{B,i} überwacht, für welche er keine Meldung erhält,
• einen ersten Schritt der Verbreitung des Status von Verbindungen, welcher bei der ersten Frequenz F₁ ausgeführt wird, bei welcher nur die Qualitätsinformationen über die Verbindungen L_{A,i}, L_{B,j} entsprechend der ersten Untergruppe G₁ von einem Knoten A, B an den Server-Rendezvous-Knoten Rs übertragen werden, welcher diese Information beim Meldeschritt erbeten hat,
• einen ersten Schritt der Erzeugung einer Konnektivitäts-Tabelle oder - Karte K_{AF1}, K_{BF1} für jeden Client-Rendezvous-Knoten A und B, welche die vom Server-Rendezvous-Knoten Rs angeforderten Messungen enthält, welche bei der ersten Frequenz F₁ durch jeden der Client-Rendezvous-Knoten A und B in Richtung der Knoten des Netzwerks der Untergruppe G₁ durchgeführt wurden,
• einen zweiten Schritt der Verbreitung des Status von Verbindungen, welcher bei der zweiten Frequenz F₂ ausgeführt wird, wobei sämtliche Qualitätsinformationen der anderen Verbindungen L'_{A,i}, L'_{B,j} von den Knoten A, B an sämtliche Server-Rendezvous Rs weitergemeldet werden,
• einen zweiten Schritt der Erzeugung, nach dem zweiten Schritt der Verbreitung, einer Konnektivitäts-Tabelle oder -Karte K_{AF2}, K_{BF2}, welche die Messungen an Verbindungen enthält, welche mit allen Knoten des Netzwerks assoziiert sind,
• einen Schritt der Berechnung von Empfehlungen, wobei jeder Server-Rendezvous-Knoten, welcher einem Knoten A und einem Knoten B gemeinsam ist, die beste Route oder den besten Weg in zwei Sprüngen bestimmt, welche(r) einen einzigen Zwischenknoten beinhaltet, um die Kommunikationen vom Knoten A zum Knoten B zu befördern, wobei der beste Weg bestimmt wird, indem die an allen Verbindungen des Netzwerks vorgenommenen, und bei jedem Schritt des Verbreitens abgegriffenen, Messungen verwendet werden, durch Kombinieren der vom Knoten A und vom Knoten B empfangenen Konnektivitätskarten K_{AF2}, K_{BF2} und durch Erzielen, in einer resultierenden Tabelle K_{AB}, des Merkmals der Wege, welche die Knoten A und B verbinden, indem sie durch jeden anderen Knoten des Netzwerks passieren, und wobei das Merkmal es ermöglicht, die Relais-Knoten zu identifizieren, die bessere Leistungsmerkmale bieten als diejenigen, die bei der direkten Konnektivität zwischen dem Knoten A und dem Knoten B gefunden werden,
• einen Schritt der Übertragung der Empfehlungen, wobei jedes Server-Rendezvous, welches den Knoten A und B gemeinsam ist, nach jedem Schritt des Verbreitens einem jeden seiner Client-Rendezvous-Knoten A, B, eine Empfehlung sendet, welche den als Relais zu verwendenden Zwischenknoten angibt, um eine Route oder einen Weg in zwei Sprüngen zu erzielen, die/der bessere Eigenschaften als der direkte Anschluss von A nach B bietet.

2. Optimierungsverfahren nach Anspruch 1, **dadurch gekennzeichnet, dass** der für die Client-Rendezvous-Knoten bestimmte beste Weg eine Route in zwei Sprüngen ist, welche einen einzigen Zwischenknoten beinhaltet.

3. Verfahren nach Anspruch 1, **dadurch gekennzeichnet, dass** man zum Bestimmen einer Untergruppe G₁, G₂ die n Knoten betrachtet, welche die kürzesten Verzögerungszeiten zwischen A und B bieten.

4. Verfahren nach Anspruch 1, **dadurch gekennzeichnet, dass** zum Bestimmen der Untergruppe G₁ ein Server-Rendezvous als Kriterium die RTT-Verzögerung der Signallaufzeit zwischen einem Knoten A, B und einem Knoten des Netzwerks verwendet.

5. Verfahren nach Anspruch 1, **dadurch gekennzeichnet, dass** zum Bestimmen der Untergruppe G₁ ein Server-Rendezvous als Kriterium die Verlustquote und/oder den Wert der Passbandbreite verwendet.

6. Verfahren nach Anspruch 1, **dadurch gekennzeichnet, dass** zum Bestimmen der Untergruppe G₁ ein Server-Rendezvous als Kriterium die Stabilität einer Verbindung L_{A,i}, L_{B,j} oder die Kosten der Verbindung, oder den Sicherheitslevel der Verbindung, oder allgemeiner eine zusammengesetzte Metrik aus einer Gruppe von Qualitäts- oder Stabilitäts-/Kosten-/Sicherheitskriterien verwendet.

7. Verfahren nach einem der vorhergehenden Ansprüche, **dadurch gekennzeichnet, dass** ein Server-Rendezvous-Knoten eine Gruppe von Zwischenknoten bestimmt, indem er hierfür als Kriterium den Wert der Verzögerungszeit eines RTT-Hin- und Rückweges verwendet und dadurch, dass ein Server-Rendezvous-Knoten den Client-Rendezvous-Knoten diese Information übermittelt.

8. Verfahren nach einem der vorhergehenden Ansprüche, **dadurch gekennzeichnet, dass** man ein Netzwerk verwendet, welches eine Struktur besitzt, in welcher die Server-Rendezvous in einer gleichen Zeile und einer gleichen Spalte wie der Knoten A, B liegen, oder ein Netzwerk vom Typ DHT mit zentralem Server.

9. Verfahren nach einem der vorhergehenden Ansprüche, **dadurch gekennzeichnet, dass** man die Werte der Überwachungsfrequenzen der Verbindungen angesichts der Art des Netzwerks variieren lässt, oder der Zielsetzung in Bezug auf Trafic-Engineering, oder von Ereignissen, die innerhalb des Netzwerks eintreten.

10. Vorrichtung zum Optimieren der Verbreitung von Qualitätsinformationen von Verbindungen in einem Overlay-Netzwerk, welches mehrere Knoten Ni, Nj besitzt, darunter mehrere Knoten, die Server-Rendezvous Rs sind, mindestens einen Client-Rendezvous-Knoten A und mindestens einen Client-Rendezvous-Knoten B, einen Knoten, der die Rolle eines Server-Rendezvous-Knoten oder eines Client-Rendezvous-Konten spielen kann, wobei ein Client-Rendezvous-Knoten ein Knoten ist, der die beste Route zwischen einem Paar von Client-Rendezvous-Knoten bestimmt, wobei die Optimierungsvorrichtung das Overlay-Netzwerk beinhaltet, wobei jeder Server-Rendezvous-Knoten Rs Folgendes beinhaltet:
• ein Kommunikationsmodul (500),
• eine Datenbank (501), welche mindestens eine erste Untergruppe G₁ von Knoten beinhaltet, deren Benutzungswahrscheinlichkeit für Kommunikationen zwischen A und B größer ist als für Knoten einer zweiten Untergruppe G₂,
• ein Modul (502) zum Steuern der Optimierung entsprechend den Schritten nach einem der Ansprüche 1 bis 9,
• ein Modul (503) zum Steuern des Meldungsmechanismus, welches geeignet ist, den Client-Rendezvous-Knoten A und B eine Liste der Knoten zu übermitteln, welche zur ersten Untergruppe G₁ gehören, zu welchen die Verbindungen L_{A,i}, L_{B,j} bei einer ersten Frequenz F₁ überwacht werden sollen, wobei der Status der anderen Verbindungen bei einer zweiten Frequenz F₂ überwacht werden soll, welche niedriger als die erste Frequenz F₁ ist, so dass der Knoten A bei der ersten Frequenz F₁ den Status aller Verbindungen L_{A,i} überwacht, für welche er eine Meldung vom Server-Rendezvous-Knoten erhält, und bei der zweiten Frequenz F₂ den Status aller Verbindungen L'_{A,i} überwacht, für welche er keine Meldung erhält, so dass der Knoten B bei der Frequenz F₁ den Status aller Verbindungen L_{B,i} überwacht, für welche er eine Meldung vom Server-Rendezvous-Knoten erhält, und bei der zweiten Frequenz F₂ den Status aller Verbindungen L'_{B,i} überwacht, für welche er keine Meldung erhält,
• ein Modul (504), welches geeignet ist, die Verteilung der Routen-Empfehlungen zu steuern, wobei jeder Server-Rendezvous-Knoten, welcher einem Knoten A und einem Knoten B gemeinsam ist, die beste Route oder den besten Weg in zwei Sprüngen bestimmt, welche(r) einen einzigen Zwischenknoten beinhaltet, um die Kommunikationen vom Knoten A zum Knoten B zu befördern, wobei der beste Weg bestimmt wird, indem die an allen Verbindungen des Netzwerks vorgenommenen, und bei jedem Schritt des Verbreitens abgegriffenen, Messungen verwendet werden, durch Kombinieren der vom Knoten A und vom Knoten B empfangenen Konnektivitätskarten K_{AF2}, K_{BF2} und durch Erzielen, in einer resultierenden Tabelle K_{AB}, des Merkmals der Wege, welche die Knoten A und B verbinden, indem sie durch jeden anderen Knoten des Netzwerks passieren, wobei das Merkmal es ermöglicht, diejenigen Relais-Knoten zu identifizieren, welche bessere Leistungsmerkmale bieten als diejenigen, die bei der direkten Konnektivität zwischen dem Knoten A und dem Knoten B gefunden werden, wobei das Modul (504) in Vermittlung des Kommunikationsmoduls (500) und des Kommunikationsmoduls (600) kommuniziert,
• ein Modul (506) zum Steuern des Status der Verbindungen, welches geeignet ist, den Status der Verbindungen an eine Datenbank (507) zu übertragen,
• ein Modul (508) zur Definition und Steuerung der Struktur des Overlay-Netzwerks,
• eine Datenbank (509), welche eine Tabelle der Knoten des Overlay-Netzwerks enthält, welche dem Definitions- und Steuermodul (508) der Struktur des Overlay-Netzwerks bekannt ist,
wobei jeder Client-Rendezvous-Knoten A, B Folgendes beinhaltet:
• ein Kommunikationsmodul (600),
• ein Modul (601) zur Steuerung der Optimierung der Überwachung der Verbindungen und der Verbreitung von Zuständen von Verbindungen auf Höhe der Knoten, welches geeignet ist, einen ersten Schritt des Verbreitens des Zustandes von Verbindungen auszuführen, welcher bei der ersten Frequenz F₁ ausgeführt wird, wobei einzig die Informationen zu den Verbindungen L_{A,i}, L_{B,j} entsprechend der ersten Untergruppe G₁ von einem Knoten A, B an einen Server-Rendezvous-Knoten Rs übertragen werden, welcher diese Information erbeten hat, wobei ein zweiter Schritt der Verbreitung des Status von Verbindungen bei der zweiten Frequenz F₂ ausgeführt wird, wobei sämtliche Qualitätsinformationen der anderen Verbindungen L'_{A,i}, L'_{B,j} von den Knoten A, B an die Server-Rendezvous-Knoten Rs weitergemeldet werden,
• eine Datenbank (602), welche die Parameter der Informationsverbreitungsstrategie enthält,
• eine Routing-Tabelle (603),
• ein Modul (604) zur Steuerung der Meldungen, welches die Befehle/Meldungsnachrichten abgreift, welche von einem Server-Rendezvous-Knoten gesendet werden,
• eine Datenbank (605), welche die Meldungen beinhaltet, die von einem Server-Rendezvous-Knoten gesendet werden,
• ein Modul (606) zur Steuerung der Empfehlungen und eine Datenbank (607), welche die Empfehlungstabellen in der Auswahl der zu verwendenden Knoten beinhaltet,
• ein Modul (608) zur Messung und Steuerung des Status der in der Datenbank (609) der Verbindungsstatus gespeicherten Verbindungen, welches geeignet ist, einen ersten Schritt der Erzeugung einer Konnektivitäts-Tabelle oder -Karte K_{AF1}, K_{BF1} zu erzeugen, für jeden Client-Rendezvous-Knoten A und B, welche die vom Server-Rendezvous-Knoten angeforderten und bei der ersten Frequenz F₁ durch einen jeden Client-Rendezvous-Knoten A und B in Richtung der Knoten des Netzwerks an seine Untergruppe G₁ durchgeführten Messungen enthält, und eine zweite Konnektivitäts-Tabelle oder -karte K_{AF2}, K_{BF2}, welche die Messungen an Verbindungen enthält, welche mit allen Knoten des Netzwerks assoziiert sind,
• ein Modul zur Überwachungssteuerung (610),
• ein Modul (611) zum Steuern der Struktur des Overlay-Netzwerks, welches geeignet ist, die Anordnung der in einer Datenbank (612) gespeicherten Knoten zu definieren.

## Claims

1. Method for optimising the dissemination of link quality information in an overlay network comprising a plurality of nodes Ni, Nj, of which a number of nodes are server meeting nodes Rs, at least one client meeting node A and at least one client meeting node B, a node that can act as server meeting or client meeting node, a client meeting node being a node that will determine the best route between a pair of client meeting nodes, the nodes of the overlay network being organised in grid form, in which the nodes on one and the same line or on one and the same column are server meeting and client meeting nodes to one another, the method comprising:
• a step in which a server meeting node Rs determines at least one first subset G₁ of nodes for which the probability of being used for the communications between the client meeting nodes A and B is higher than for the nodes of a second subset G₂ of nodes;
• a notification step in which the server meeting node Rs transmits to the client meeting nodes A and B a list of nodes that belong to the first subset G₁ to which the links L_{A,i}, L_{B,j} are to be monitored at a first frequency F₁, the state of the other links being to be monitored at a second frequency F₂ that is lower than the first frequency F₁, so that the node A monitors, at the first frequency F₁, the state of all the links L_{A,i}, for which it receives a notification from the server meeting node and monitors, at the second frequency F₂, the state of all the links L'_{A,i}, for which it does not receive notification, and so that the node B monitors, at the first frequency F₁, the state of all the links L_{B,i}, for which it receives a notification from the server meeting node and monitors, at a second frequency F₂, the state of all the links L'_{B,i}, for which it does not receive notification;
• a first step of link state dissemination executed at said first frequency F₁ in which only the quality information concerning the links L_{A,i}, L_{B,j} according to the first subset G₁ is transmitted from a node A, B to the server meeting node Rs having requested this information during the notification step;
• a first step of generating a connectivity table or map K_{AF1}, K_{BF1} relating to each client meeting node A and B, containing the measurements required by the server meeting node Rs performed at the first frequency F₁ by each client meeting node A and B towards the nodes of the network of to the subset G₁;
• a second step of link state dissemination executed at said second frequency F₂ in which the set of quality information concerning the other links L'_{A,i}, L'_{B,j} is returned from the nodes A, B to all the server meeting nodes Rs;
• following the second step of dissemination, a second step of generating a connectivity table or map K_{AF2}, K_{BF2} containing the measurements on links associated with all the nodes of the network;
• a step of computing recommendations, in which each server meeting node that is common to node A and to node B, determines the best route or the best path with two hops comprising a single intermediate node to route the communications from node A to node B, the best path being determined by using the quality measurements carried out on all the links of the network and recovered during each dissemination step, by combining the connectivity maps K_{AF2}, K_{BF2} received from node A and from node B and by obtaining, in an resulting table K_{AB}, the characteristic of the paths which link the nodes A and B by passing through each other node of the network and which makes it possible to identify the relay nodes that provide better performance than those found on the direct connectivity between node A and node B;
• a step of transmitting recommendations, in which each server meeting node that is common to node A and B sends, after each dissemination step, to each of its client meeting nodes A, B a recommendation indicating the intermediate node to be used as relay to obtain a route or path with two hops which offers better properties than the direct connection for joining A and B.

2. Optimisation method according to claim 1, **characterised in that** the best path determined for the client meeting nodes is a route with two hops comprising a single intermediate node.

3. Method according to claim 1, **characterised in that**, to determine a subset G₁, G₂, the n nodes which offer the shortest delays between A and B are considered.

4. Method according to claim 1, **characterised in that**, to determine a subset G₁, a server meeting node uses as criterion the travel time delay RTT between a node A, B and a node of the network.

5. Method according to claim 1, **characterised in that**, to determine the subset of nodes G₁, a server meeting node uses as criterion the loss rate and/or the bandwidth value.

6. Method according to claim 1, **characterised in that**, to determine the subsets of nodes G₁, a server meeting node uses as criterion the stability of a link L_{A,i}, L_{B,j} or the cost of the link, or the links security level, or, more generally, a composite metric of a set of quality or stability/cost/security criteria.

7. Method according to any one of the preceding claims, **characterised in that** a server meeting node determines a set of intermediate nodes by using as criterion the value of the round trip time RTT and **in that** a server meeting node transmits this information to the client meeting nodes.

8. Method according to any one of the preceding claims, **characterised in that** a network is used that has a structure in which the server meeting nodes are situated on one and the same row and one and the same column as a node A, B or a network of DHT, central server, type.

9. Method according to any one of the preceding claims, **characterised in that** the values of the link monitoring frequencies are varied as a function of the nature of the network, or of the traffic engineering objective, or of events occurring in the network.

10. Device for optimising the dissemination of link quality information in an overlay network comprising a plurality of nodes Ni, Nj, of which a number of nodes are server meeting nodes Rs, at least one client meeting node A and at least one client meeting node B, a node that can act as server meeting or client meeting node, a client meeting node being a node that will determine the best route between a pair of client meeting nodes, said optimisation device comprising said overlay network, each server meeting node Rs comprising:
• a communication module (500);
• a database (501) comprising at least one first subset G₁ of nodes, for which the probability of being used for communications between A and B is higher than for the nodes of a second subset G₂;
• an optimization control module (502) according to the steps of any one of claims 1 to 9;
• a notification mechanism control module (503) suitable for transmitting to the client meeting nodes A and B a list of nodes that belong to the first subset G₁ to which the links L_{A,i}, L_{B,j} are to be controlled at a first frequency F₁, the state of the other links being to be monitored at a second frequency F₂ that is lower than the first frequency F₁, so that the node A monitors, at the first frequency F₁, the state of all the links L_{A,i}, for which it receives a notification from the server meeting node and monitors, at the second frequency F₂, the state of all the links L'_{A,i}, for which it does not receive notification, and so that the node B monitors, at the first frequency F₁, the state of all the links L_{B,i}, for which it receives a notification from the server meeting node and monitors, at a second frequency F₂, the state of all the links L'_{B,i}, for which it does not receive notification;
• a module (504) suitable for controlling the broadcasting of route recommendations, in which each server meeting node that is common to node A and B determines the best route or the best path with two hops comprising a single intermediate node to route the communications from node A to node B, the best path being determined by using the quality measurements carried out on all the links of the network and recovered during each dissemination step, by combining the connectivity maps K_{AF2}, K_{BF2} received from node A and from node B and by obtaining, in a resulting table K_{AB}, the characteristic of paths which link the nodes A and B by passing through each other node of the network, and which make it possible to identify the relay nodes that provide better performance than those found on the direct connectivity between the nodes A and B, the module (504) communicating through the communication module (500) and the communication module (600);
• a module (506) for controlling the state of links suitable for transmitting the state of links to a database (507);
• a module (508) for defining and controlling the structure of the overlay network;
• a database (509) containing a table of the nodes of the overlay network which is known to the module (508) for defining and controlling the structure of the overlay network;
each client meeting node A, B comprising:
• a communication module (600);
• a module (601) for controlling the optimisation of the monitoring of links and of the link state dissemination at the node level, adapted for executing a first step of link state dissemination executed at said first frequency F₁, in which only the information concerning the links L_{A,i}, L_{B,j} according to the first subset G₁ is transmitted from a node A, B to a server meeting node Rs having requested this information, a second step of link state dissemination executed at said second frequency F₂ in which the set of quality information concerning the other links L'_{A,i}, L'_{B,j} is returned from the nodes A, B to the server meeting nodes Rs;
• a database (602) containing parameters of the information dissemination strategy;
• a routing table (603);
• a module (604) for controlling notifications which will recover the notification commands/messages sent by a server meeting node;
• a database (605) comprising notifications sent by a server meeting node;
• a module (606) for controlling recommendations and a database (607) comprising the tables of recommendations in the choice of nodes to be used;
• a module (608) for measuring and controlling the state of the links stored in the link states database (609), adapted for generating a first step of generating a connectivity table or map K_{AF1}, K_{AF2} relating to each client meeting node A and B, containing the measurements required by a server meeting node performed at the first frequency F₁ by each client meeting node A and B towards the nodes of the network which belong to the subset G₁ and a second connectivity table or map K_{AF2}, K_{BF2} containing the measurements on links associated with all the nodes of the network;
• a monitoring control module (610);
• a module (611) for controlling the structure of the overlay network suitable for defining the arrangement of the nodes stored in a database (612).
